Europäisches Patentamt

European Patent Office

Office européen des brevets

(19)

(11) Veröffentlichungsnummer: **0 111 674**
**B1**

(12) # EUROPÄISCHE PATENTSCHRIFT

(45) Veröffentlichungstag der Patentschrift:
03.05.89

(51) Int. Cl.⁴: **B 60 N 1/06**, B 60 N 1/08

(21) Anmeldenummer: **83110392.4**

(22) Anmeldetag: **19.10.83**

(54) **Sitz, insbesondere Kraftfahrzeugsitz.**

(30) Priorität: **16.12.82 DE 3246564**

(43) Veröffentlichungstag der Anmeldung:
**27.06.84 Patentblatt 84/26**

(45) Bekanntmachung des Hinweises auf die Patenterteilung:
**03.05.89 Patentblatt 89/18**

(84) Benannte Vertragsstaaten:
**DE FR GB IT**

(56) Entgegenhaltungen:
**EP-A- 0 076 041**
**DE-A- 2 659 308**
**FR-A- 2 215 109**
**FR-A- 2 343 449**
**FR-A- 2 383 633**
**FR-A- 2 432 951**

(73) Patentinhaber: **KEIPER RECARO GMBH & CO.,
Büchelstrasse 54-58, D-5630 Remscheid-Hasten (DE)**

(72) Erfinder: **Klüting, Bernd, Ing. grad.,
Jung-Stilling-Weg 18, D-5608 Radevormwald (DE)**
Erfinder: **Bertram, Klaus Dieter, Leipziger Strasse 14,
D-5630 Remscheid (DE)**

(74) Vertreter: **Buse, Karl Georg, Dipl.-Phys. et al,
Patentanwälte Dipl.-Phys. Buse Dipl.-Phys. Mentzel
Dipl.-Ing. Ludewig Unterdörnen 114,
D-5600 Wuppertal 2 (DE)**

## Beschreibung

Die Erfindung betrifft einen Sitz, insbesondere Kraftfahrzeugsitz, mit auf beiden Sitzlängsseiten angeordneten Sitzschienen, die Verbindungsglieder zwischen dem Fahrzeugboden und dem Sitz darstellen und eine Führungsschiene sowie eine darin längsverschiebbare Laufschiene umfassen, wobei die Laufschiene aus zwei Profilblechen zu einer T-Schiene zusammengesetzt und in ihrem rückwärtigen Bereich mit einem die Rückenlehne an den Sitzteil anschließenden Drehgelenk verbunden ist, dessen beide Gelenkteile über eine Schwenkachse miteinander verbunden sind und eine die Lage der Gelenkteile zueinander bestimmende, als Getriebe ausgebildete Ver- und Feststelleinrichtung vorgesehen ist.

Bei einem aus der DE-OS 2 659 308 bekannten Fahrzeugsitz ist das die Rückenlehne mit dem Sitzteil verbindende Drehgelenk an seinem dem Sitzteil zugeordneten Gelenkteil als Sitzträger ausgebildet, an welchem einerseits das Sitzteil befestigt ist und der sich andererseits über Schwenkstützen an einer Führungsschiene abstützt. Obschon die Verwendung des unteren Gelenkteiles als Sitzträger vorteilhaft ist, so wurde doch eine vollständige Integration von Sitzteil und Sitzträger deshalb nicht erzielt, weil zur Bildung der Sitzpolsterung noch ein separates Sitzteilgestell erforderlich ist.

Darüber hinaus ist eine Sitzschiene bekannt, bei welcher neben der Führungsschiene auch die Laufschiene aus zwei Profilblechen zusammengesetzt ist und ohne Zwischenschaltung besonderer Anschlußbauteile mit dem Sitzteil verbunden werden kann. Allerdings ist es erforderlich, zwischen dem Sitzteil und der Rückenlehne ein Drehgelenk zu verwenden, welches einerseits als separates Bauteil ausgebildet ist und andererseits an seinen Gelenkhebeln Anschlußaugen zur Anbindung an die Rückenlehne und Anschlußaugen zur Anbindung an den Sitzteilrahmen aufweist. Eine Integration des Drehgelenkes mit der Laufschiene ist bei der bekannten Lösung nicht möglich.

Die Aufgabe der vorliegenden Erfindung besteht darin, einen Sitz der vorgenannten Art zu schaffen, in dessen Laufschiene unter Beibehaltung des Vorteiles ihrer Funktion als Sitzseitenrahmen das Drehgelenk zur Verbindung von Sitzteil und Rückenlehne integriert ist.

Diese Aufgabe wird erfindungsgemäß dadurch gelöst, daß der eine Gelenkteil mit einem Aufnahmestellen für die Sitzpolsterung aufweisenden Tragprofil der Laufschiene fest verbunden ist und der andere, mit der Rückenlehne verbundene Gelenkteil von einem Halteprofil der Laufschiene bereichsweise umgriffen ist. Dadurch wird einerseits ein separater Sitzteilrahmen vermieden und andererseits wird das Drehgelenk Bestandteil der zusammen mit der Führungsschiene die Sitzschiene bildenden Laufschiene und stellt zusammen mit dieser eine Baueinheit her. Dies ermöglicht nicht zuletzt wegen des geringeren Bauteileaufwandes eine wirtschaftliche Fertigung und führt darüber hinaus zu einer Reduzierung des Bauraumes.

Um das Sitzteil unter Einbeziehung der Laufschiene aufbauen zu können, sind nach einem Ausgestaltungsmerkmal der Erfindung Aufnahmestellen am Tragprofil der Laufschiene an oberseitigen Abwinklungen der Tragprofile angeordnet, wobei der Verlauf der Abwinklungen der Sitzkontur nachgeformt ist.

Damit die Übertragungskräfte des Drehgelenkes mit ihrer Wirkungslinie möglichst nahe an die Stützebene der Sitzschiene zur Vermeidung von Biegemomenten herangeführt werden können, weist nach einem weiteren Ausgestaltungsmerkmal der Erfindung der Verbindungsbereich des Tragprofiles eine zur Sitzmitte hin weisende Abkröpfung und der Haltebereich des Halteprofiles eine nach außen weisende Abkröpfung auf.

Obschon die Möglichkeit gegeben ist, das Innenzahnrad des Drehgelenkes mit der Laufschiene zu verbinden und das in das Innenzahnrad eingreifende Stirnrad der Rückenlehne zuzuordnen, so ist es doch vorteilhaft, umgekehrt zu verfahren und den Innenzahnkranz auf dem Stirnrad «taumeln» zu lassen. Deshalb weist vorteilhaft das Tragprofil eine segmentartige Aussparung im Verbindungsbereich auf uns ist mit dem Stirnzahnrad der Ver- und Feststelleinrichtung unmittelbar verbunden. In diesem Fall umgreift das Innenzahnrad das Stirnrad in bekannter Weise und stützt sich auf der mit dem Exzenterabschnitt im Stirnrad gelagerten Schwenkachse ab. An diesem Innenzahnkranz ist dann der Rückenlehnenrahmen angeschlossen. Um eine stabilere Anbindung des Stirnrades an das Tragprofil der T-Schiene zu ermöglichen, weist bei einem alternativen Ausführungsbeispiel das Tragprofil im Verbindungsbereich ein Anschlußauge auf, welches das Stirnzahnrad allseitig überragend, mit diesem fest verbunden ist. Als Verbindungsmittel lassen sich Bolzen, Schrauben, Nieten od. dgl. einsetzen, und alternativ können die Bauteile auch miteinander verschweißt sein.

Um den Materialaufwand zu verringern, ist nach einem weiteren Ausgestaltungsmerkmal der Erfindung die Laufschiene aus dem Tragprofil und einem damit im Fußbereich verbundenen, in die Führungsschiene eingreifenden Ergänzungsprofilstab gebildet und im Anschlußbereich für das Drehgelenk mit einem dessen axiale Stützung übernehmenden Haltesegment verbunden. Damit entfällt die vom Fußbereich der Laufschiene bis zur Anbindungsstelle des Drehgelenkes hochgezogene Blechlamelle.

Die Erfindung ist in mehreren Ausführungsbeispielen auf der Zeichnung dargestellt, die nachfolgend näher erläutert sind. Es zeigen:

Fig. 1 die erfindungsgemäße Sitzschiene mit einem angeschlossenen Drehgelenk in einer Seitenansicht,

Fig. 2 die aus Fig. 1 ersichtliche Sitzschiene in einem Vertikalschnitt nach der Linie II–II von Fig. 1 in einem gegenüber Fig. 1 vergrößerten Maßstab,

Fig. 3 die aus Fig. 1 ersichtliche Sitzschiene in einem Vertikalschnitt nach der Linie III–III von Fig. 1 in einem ebenfalls gegenüber Fig. 1 vergrößerten Maßstab,

Fig. 4 den Drehgelenkanschlußbereich eines weiteren Ausführungsbeispieles einer Laufschiene in einer Seitenansicht,

Fig. 5 den aus Fig. 4 ersichtlichen Anschlußbereich einer Laufschiene in einem Vertikalschnitt nach der Linie V–V von Fig. 4,

Fig. 6 ein weiteres Ausführungsbeispiel einer Laufschiene, deren Drehgelenkanschlußbereich in einer Seitenansicht im Schnitt nach der Linie VI–VI von Fig. 7 dargestellt ist,

Fig. 7 den aus Fig. 6 ersichtlichen Drehgelenkanschußbereich einer Laufschiene in einem Vertikalschnitt nach der Linie VII–VII von Fig. 6.

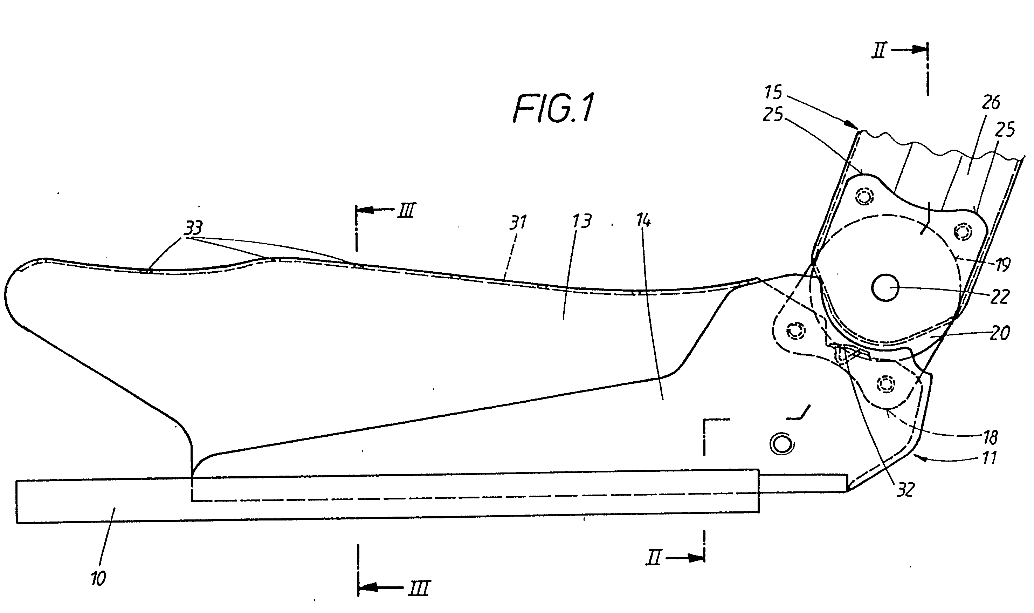

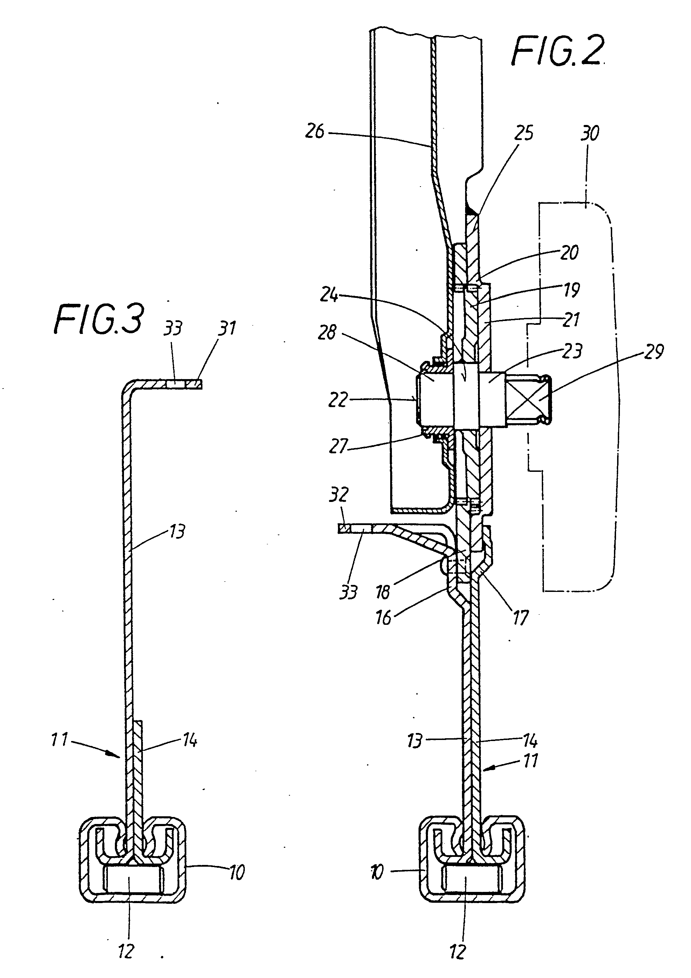

Der erfindungsgemäße Sitz umfaßt in bekannter Weise einen nicht näher dargestellten Sitzteil und eine damit drehverbundene, ebenfalls nicht näher dargestellte Rückenlehne 15. Bestandteil des Sitzteiles ist eine Sitzschiene gemäß dem aus den Fig. 1 bis 3 ersichtlichen Ausführungsbeispiel. Die Sitzschiene besteht danach im wesentlichen aus einer Führungsschiene 10 und aus einer darin verschiebbaren Laufschiene 11. Diese Laufschiene stützt sich auf Rollkörpern in Form von Walzen 12 in der Führungsschiene 10 ab, die einen etwa C-förmigen Querschnitt aufweist. Die Laufschiene ist dabei aus zwei Profilblechen zu einer einen etwa T-förmigen Querschnitt aufweisenden Schiene zusammengesetzt, wobei das eine Profilblech ein Tragprofil 13 und das andere Profilblech ein Halteprofil 14 bildet. Das Tragprofil 13 und das Halteprofil 14 können beispielsweise durch eine Punktschweißung miteinander zu der T-Schiene 11 verbunden sein. Während im vorderen Bereich der T-Schiene das Tragprofil 13 gegenüber dem Halteprofil 14 wesentlich höher gezogen ist, erstrecken sich im hinteren Bereich der T-Schiene das Tragprofil 13 und das Halteprofil 14 bis etwa in die gleiche Höhenlage. In diesem hinteren Bereich ist bei dem aus den Fig. 1 bis 3 ersichtlichen Ausführungsbeispiel – wie insbesondere aus Fig. 2 zu ersehen ist – sowohl der obere Randbereich des Tragprofils 13 als auch des Halteprofils 14 mit jeweils einer Abkröpfung 16 bzw. 17 versehen. An die Abkröpfung 16 des Tragprofils 13 schließt ein ausgepreßter Anschlußlappen des Stirnrades 19 an, der mit dem Tragprofil 13 fest verbunden ist, was beispielsweise durch Vernieten, Verschrauben oder Verschweißen erzielt werden kann. Das Stirnrad 19 kämmt mit einem dieses umgreifenden Innenzahnrad 20, das durch Ausdrücken einer auf der Schwenkachse 22 lagernden Stützscheibe 21 gebildet ist. Unmittelbar neben dem zentrischen Abschnitt 23 der Schwenkachse 22 ist ein Exzenterabschnitt 24 angeordnet, auf welchem das Stirnzahnrad 19 drehgelenkig gelagert ist. In seinem oberen Bereich weist das Innenzahnrad 20 Anschlußaugen 25 auf, die mit einem Rückenlehnenrahmen 26 fest verbunden sind, was in üblicher Weise durch Vernieten, Verschrauben oder Verschweißen geschehen kann. Dieser Rückenlehnenrahmen 26 stützt sich über eine mit diesem drehfest verbundene Lagerbuchse auf einem zum zentrischen Abschnitt 23 der Schwenkachse 22 angeordneten Lagerzapfen 28 drehbar ab. An dem zentrischen Abschnitt 23 der Schwenkachse 22 schließt sich ein Mitnehmerzapfen 29 zur Verbindung mit einer in strichpunktierten Linien dargestellten Handhabe 30 an.

Das Stirnrad 19 weist gegenüber dem Innenzahnrad 20 eine Zähnezahldifferenz von wenigstens einem Zahn auf, und der Außendurchmesser des Stirnrades 19 ist um wenigstens eine Zahnhöhe kleiner als der Fußkreisdurchmesser des Innenzahnrades 20. Dabei entspricht die Exzentrizität des Exzenterabschnittes 24 gegenüber dem zentrischen Abschnitt 23 bzw. dem Lagerzapfen 28 der Differenz des Wälzkreisradien des Stirnrades 19 und des Innenzahnrades 20. Das Stirnrad 19 und das Innenzahnrad 20 bilden zusammen mit der Schwenkachse 22 ein Selbsthemmung aufweisendes, stufenlos einstellbares Drehgelenk zur Verbindung des Rückenlehnenrahmens 26 mit der T-Schiene 11, wobei das Stirnzahnrad 19 und das Innenzahnrad 20 die Gelenkteile des Drehgelenkes bilden. Während im oberen Bereich des Drehgelenkes, dessen axialer Zusammenhalt durch die Verbindung der Anschlußaugen 25 mit dem Rückenlehnenrahmen 26 erfolgt, indem dessen die Lagerbuchse 27 aufnehmender Stützschenkel den Randbereich des Stirnrades 19 übergreift, erfolgt der axiale Zusammenhalt im unteren Bereich des Drehgelenkes durch die das Innenzahnrad seitlich übergreifende Abkröpfung 17 des Halteprofiles 14. Dieses Halteprofil dient demnach der Bildung des T-förmigen Fußbereiches der T-Schiene, der Verstärkung des hinteren Anschlußbereiches des Drehlagers und dessen axialem Zusammenhalt. Das Tragprofil 13 dient neben der Bildung des T-förmigen Fußbereiches der Laufschiene und der Abstützung sowie Anbindung des Drehgelenkes auch der Aufnahme der Sitzpolsterung. Zu diesem Zweck ist das Tragprofil oberseitig mit einer der Sitzkontur nachgeformten Abwinklung 31 versehen, wobei auch im Bereich des Drehlagers ein Winkelschenkel 32 an das Tragprofil angeformt ist, wobei die Abwinklung 31 und der Winkelschenkel 32 mit Aufnahmestellen 33 für die Sitzpolsterung versehen sind.

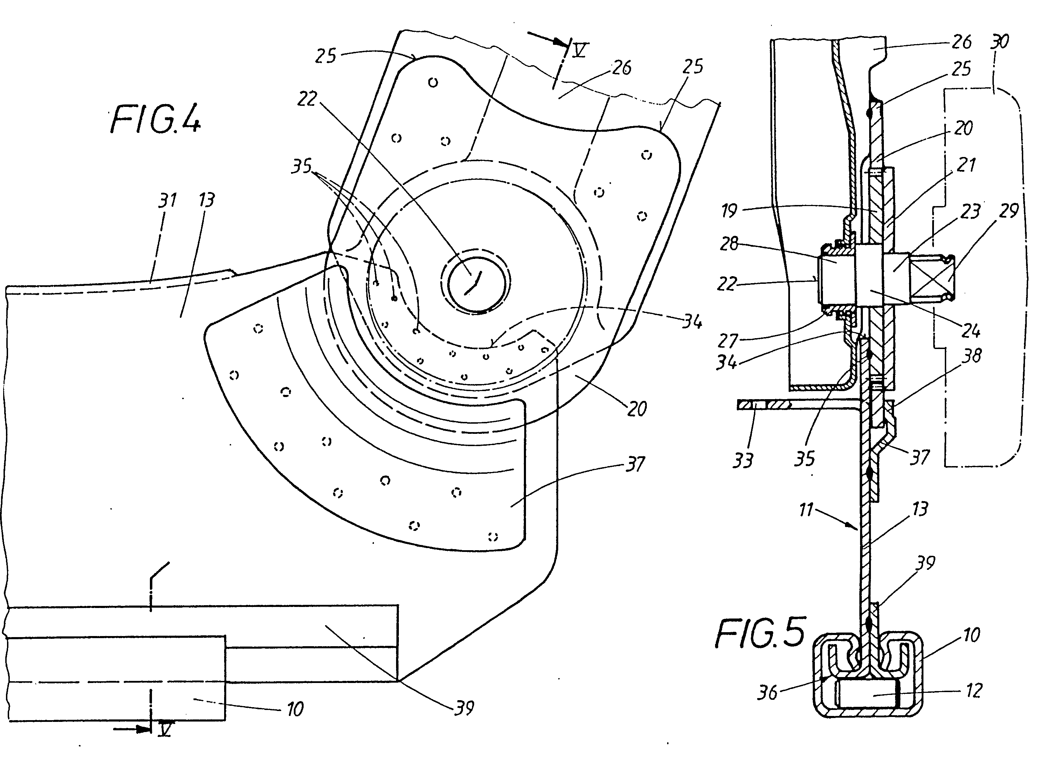

Das aus den Fig. 4 und 5 ersichtliche Ausführungsbeispiel entspricht im Prinzip der oben beschriebenen Ausführung. Unterschiedlich dazu ist die Ausbildung und Anbindung des Drehgelenkes an die T-Schiene 11 und die Ausbildung dieser Schiene selbst. Das aus Fig. 5 ersichtliche Drehgelenk weist lediglich eine als Stirnrad 19 ausgebildete Scheibe auf, an die keinerlei verkröpfte Anschlußlappen angeformt sind. Vielmehr ist das Tragprofil 13 der T-Schiene 11 in radialer Richtung über den Kopfkreis der Verzahnung des Stirnrades 19 zur Schwenkachse 22 hin verlängert und weist eine Segmentaussparung 34 auf, an deren Überlappungsbereich mit dem Stirnrad 19 dieses mit dem Tragprofil 13 beispielsweise über die Schweißpunkte 35 fest verbunden ist. Das die Zahnscheibe 19 umgreifende Innenzahnrad 20 ist, wie bei dem Ausführungsbeispiel gemäß den Fig.

1 bis 3, auch bei dem Ausführungsbeispiel gemäß den Fig. 4 und 5 mit Anschlußaugen 25 versehen, die beispielsweise über eine Punktschweißung mit dem Rückenlehnenrahmen 26 im oberen Bereich des Drehgelenkes verbunden sind. Die T-Schiene 11 des aus den Fig. 4 und 5 ersichtlichen Ausführungsbeispiels weist kein Halteprofil im Sinne der aus den Fig. 1 bis 3 ersichtlichen Ausführung auf. Vielmehr bildet das Tragprofil 13 das alleinige Stützbauteil zwischen dem Drehgelenk und dem Fußbereich 36 der T-Schiene 11 einerseits und der Abwinklung 31 mit den Aufnahmestellen 33 für die Sitzpolsterung andererseits. Um jedoch den axialen Zusammenhalt des Drehgelenkes auch in seinem unteren Bereich zu gewährleisten, ist mit dem Tragprofil 13 ein Haltesegment 37 beispielsweise durch Punktschweißung fest verbunden, welches mit einer abgekröpften Führungswange 38 das Innenzahnrad 20 seitlich übergreift. Zur Bildung des T-förmigen Fußbereiches 36 der Laufschiene 11 ist mit dem Tragprofil 13 ein etwa U-förmiger Ergänzungsprofilstab 39 verbunden, welcher den an das Tragprofil 13 angeformten Fußquerschnitt spiegelbildlich ergänzt und zusammen mit diesem in die Führungsschiene 10 eingreift, um sich auf den Walzen 12 abzustützen. Die übrigen Bauteile des aus den Fig. 4 und 5 ersichtlichen Ausführungsbeispieles entsprechen denjenigen der aus den Fig. 1 bis 3 ersichtlichen Ausführung.

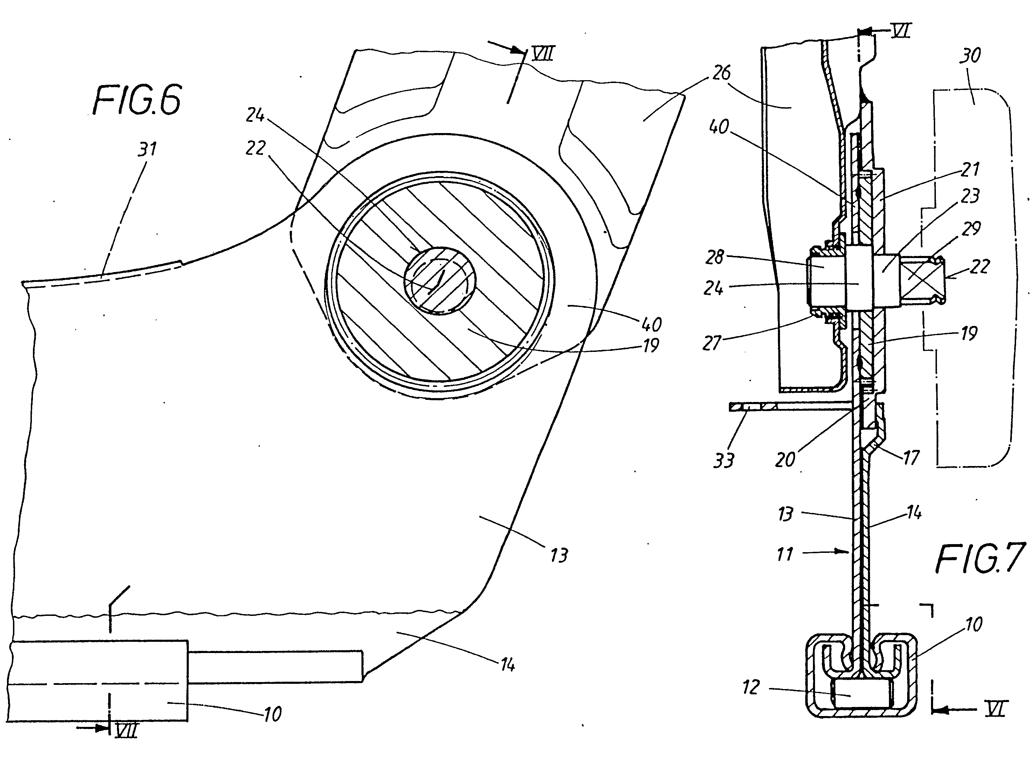

Eine weitere Variante des aus den Fig. 4 und 5 ersichtlichen Ausführungsbeispiels ist in den Fig. 6 und 7 dargestellt. Obschon auch bei diesem zuletzt dargestellten Ausführungsbeispiel die Laufschiene 11 im wesentlichen nur aus dem Tragprofil 13 gebildet sein könnte – wie dies bei der Ausführung gemäß den Fig. 4 und 5 der Fall ist – so wird doch bei dem aus den Fig. 6 und 7 ersichtlichen Ausführungsbeispiel die T-Schiene 11 wieder aus einem Tragprofil 13 und einem Halteprofil 14 gebildet. Im Unterschied zu der Ausführungsform gemäß den Fig. 4 und 5 ist jedoch das Tragprofil 13 mit einem Anschlußauge 40 versehen, welches das Stirnrad 19 in seiner Gesamtheit übergreift und mit diesem beispielsweise durch Punktschweißung fest verbunden sein kann. Das Stirnrad 19 ist auch bei dieser Ausführung von einem Innenzahnrad 20 übergriffen, das mit der ausgepreßten Stützscheibe 21 auf dem zentrischen Abschnitt 23 der Schwenkachse 22 gelagert ist. Zur axialen Lagesicherung von Stirnrad 19 bzw. Innenzahnrad 20 ist an das Halteprofil 14 im Anbindungsbereich des Drehgelenkes eine Abkröpfung 17 angeformt, die das Innenzahnrad 20 im unteren Bereich des Drehgelenkes umgreift. Die übrigen Bauteile des aus den Fig. 6 und 7 ersichtlichen Ausführungsbeispieles entsprechen denjenigen der zuvor beschriebenen Ausführungen.

Bei allen diesen Ausführungen dient die Laufschiene 11 als Träger für die Sitzpolsterung und ist in den Sitzteil vollständig integriert. Dies trifft auch für das Drehgelenk zu, welches seinerseits bei allen Ausführungsformen Bestandteil der Laufschiene 11 ist. Um nun den Rückenlehnenrahmen 26 und damit die Rückenlehne 15 in der einen oder anderen Richtung verschwenken zu können, läßt sich die Handhabe 30 verdrehen. Die sich im umdrehbar an der Laufschiene 11 gehalterten Stirnrad 19 mit dem Exzenterabschnitt 24 abstützende Schwenkachse 22 wird ebenfalls mitgedreht, wodurch der zentrische Abschnitt 23 und der gleichachsige Lagerzapfen 28 um die Längsmitte des Exzenterabschnittes 24 mit entsprechender Exzentrizität umlaufen. Bei Umlaufen der Schwenkachse wird auch die Zahneingriffsstelle zwischen dem Stirnrad 19 und dem Innenzahnrad 20 entsprechend mitumlaufen, so daß infolge des Zähnezahlunterschiedes zwischen dem Stirnrad 19 und dem Innenzahnrad 20 während einer Umdrehung der Schwenkachse 22 das Innenzahnrad 20 um die der Zähnezahldifferenz entsprechende Teilung verdreht wird. Da über die Anschlußaugen 25 der Rückenlehnenrahmen 26 mit dem das eine Gelenkteil bildenden Innenzahnrad 20 verbunden ist, wird auch die Winkellage der Rückenlehne entsprechend verstellt.

Bezugszeichenliste:
10 Führungsschiene
11 Laufschiene/T-Schiene
12 Walze
13 Tragprofil
14 Halteprofil
15 Rückenlehne
16 Abkröpfung
17 Abkröpfung
18 Anschlußlappen
19 Strinrad/Gelenkteil
20 Innenzahnrad/Gelenkteil
21 Stützscheibe
22 Schwenkachse
23 zentrischer Abschnitt
24 Exzenterabschnitt
25 Anschlußauge
26 Rückenlehnenrahmen
27 Lagerbuchse
28 Lagerzapfen von 22
29 Mitnehmerzapfen
30 Handhabe
31 Abwinklung
32 Winkelschenkel
33 Aufnahmestelle
34 Segmentaussparung
35 Schweißpunkt
36 Fußbereich
37 Haltesegment
38 Führungswange
39 Ergänzungsprofilstab
40 Anschlußauge

**Patentansprüche**

1. Sitz, insbesondere Kraftfahrzeugsitz, mit auf beiden Sitzlängsseiten angeordneten Sitzschienen, die Verbindungsglieder zwischen dem Fahrzeugboden und dem Sitz darstellen und eine Führungsschiene (10) sowie eine darin längs verschiebbare Laufschiene (11) umfassen, wobei die Laufschiene (11) aus zwei Profilblechen (13, 14) zu einer T-Schiene zusammengesetzt und in ihrem rückwärtigen Bereich mit einem die Rückenlehne (15) an den Sitzteil anschließenden Drehgelenk verbunden ist, dessen beide Gelenkteile (19, 20) über eine Schwenkachse (22) miteinander verbunden sind und eine die Lage der beiden Gelenkteile zueinander bestimmende, als Getriebe ausgebildete Ver- und Feststelleinrichtung vorgesehen ist, dadurch gekennzeichnet, daß der eine Gelenkteil (19) mit einem Aufnahmestellen (33) für die Sitzpolsterung aufweisenden Tragprofil (13) der Laufschiene (11) fest verbunden ist und der andere, mit der Rückenlehne (15) verbundene Gelenkteil (20) von einem Halteprofil (14) der Laufschiene (11) bereichsweise umgriffen ist.

2. Sitz nach Anspruch 1, dadurch gekennzeichnet, daß die Aufnahmestellen (33) am Tragprofil (13) der Laufschiene (11) an oberseitigen Abwinklungen (31, 32) der Tragprofile (13) angeordnet sind und der Verlauf der Abwinklung (31) der Sitzkontur nachgeformt ist.

3. Sitz nach Anspruch 1 oder 2, dadurch gekennzeichnet, daß der Verbindungsbereich des Tragprofiles (13) eine zur Sitzmitte weisende Abkröpfung (16) und der Haltebereich des Halteprofiles 14 eine nach außen weisende Abkröpfung (17) aufweist.

4. Sitz nach einem oder mehreren der vorhergehenden Ansprüche, dadurch gekennzeichnet, daß das Tragprofil (13) eine segmentartige Aussparung (34) im Verbindungsbereich aufweist und mit dem Stirnzahnrad (19) der Ver- und Feststelleinrichtung unmittelbar verbunden ist.

5. Sitz nach einem oder mehreren der Ansprüche 1 bis 3, dadurch gekennzeichnet, daß das Tragprofil (13) im Verbindungsbereich ein Anschlußauge (40) aufweist, welches das Stirnzahnrad (19) allseitig überragend mit diesem fest verbunden ist.

6. Sitz nach einem oder mehreren der vorhergehenden Ansprüche, dadurch gekennzeichnet, daß die Laufschiene (11) aus dem Tragprofil (13) und einem damit im Fußbereich (36) verbundenen, in die Führungsschiene (10) eingreifenden Ergänzungsprofilstab (39) gebildet ist und im Anschlußbereich für das Drehgelenk mit einem dessen axiale Stützung übernehmenden Haltesegment (37) verbunden ist.

## Claims

1. A seat, in particular a motor vehicle seat, comprising seat rails which are arranged on both longitudinal sides of the seat and which represent connecting members between the vehicle floor and the seat and which include a guide rail (10) and a slide rail (11) which is longitudinally slidable therein, wherein the slide rail (11) is made up from two shaped sheet metal members (13, 14) to provide a T-shaped rail and in its rearward region the slide rail (11) is connected to a pivot which connects the backrest (15) to the seat portion and the two pivot members (19, 20) of which are connected together by way of a pivot spindle (22), and there is provided an adjusting and fixing means which is in the form of a gear arrangement, for determining the position of the two pivot members relative to each other, characterised in that the one pivot member (19) is fixedly connected to a shaped support member (13) of the slide rail (11), which shaped support member has mounting locations (33) for the seat upholstery, and the other pivot member (20) which is connected to the backrest (15) is embraced in a region-wise manner by a shaped holding member (14) of the slide rail (11).

2. A seat according to claim 1, characterised in that the mounting locations (33) on the shaped support member (13) of the slide rail (11) are arranged on bent-over portions (31, 32) at the top side of the shaped support members (13) and the configuration of the bent-over portion (31) is shaped in accordance with the seat contour.

3. A seat according to claim 1 or 2, characterised in that the connecting region of the shaped support member (13) has an offset portion (16) which is displaced towards the middle of the seat and the holding region of the shaped holding member (14) has an outwardly directed offset portion (17).

4. A seat according to one or more of the preceding claims, characterised in that the shaped support member (13) has a segment-like cut-out (34) in the connecting region and is directly connected to the spur gear (19) of the adjusting and fixing means.

5. A seat according to one or more of claims 1 to 3, characterised in that in the connecting region the shaped support member (13) has a connecting eye (40) which, projecting on all sides beyond the spur gear (19), is fixedly connected thereto.

6. A seat according to one or more of the preceding claims, characterised in that the slide rail (11) is formed from the shaped support member (13) and a supplementary shaped bar member (39) which is connected thereto in the base region (36) and which engages into the guide rail (10), and the slide rail (11) is connected in the connection region for the pivot to a holding segment (37) which provides axial support therefor.

## Revendications

1. Siège, en particulier siège de véhicule automobile, comportant des glissières de siège disposées sur les deux côtés longitudinaux du siège, représentant les organes de liaison entre le plancher du véhicule et le siège et une glissière de guidage (10), ainsi qu'une glissière mobile (11) pouvant s'y déplacer à l'intérieur, la glissière mobile (11) étant constituée d'une glissière ou d'un rail en T réalisé à partir de deux tôles profilées (13, 14) et sa zone arrière étant reliée à une articulation tournante raccordant le dossier de siège (15) à la partie de siège, articulation dont les deux parties articulées (19, 20) sont reliées ensemble par un axe de pivotement (22) et un dispositif de déplacement et de blocage, réalisé sous forme de train d'engrenage appelé à déterminer la position des parties articulées l'une par rapport à l'autre, caractérisé en ce qu'une partie articulée (19) est rigidement reliée au profilé de support (13) de la glissière mobile (11), présentant des points de réception (33) pour le rembourrage de siège, et en ce que l'autre partie articulée (20), reliée au dossier (15), est entourée par endroits d'un profilé de support (14) de la glissière mobile (11).

2. Siège selon la revendication 1, caractérisé en ce que les points de réception (33) sont disposés sur le profilé de support (13) de la glissière mobile (11), sur des ailes (31, 32) situées du côté supérieur des profilés de support (13), et en ce que le tracé de l'aile (31) suit le contour du siège.

3. Siège selon la revendication 1 ou 2, caractérisé en ce que la zone de liaison du profilé de support (13) présente un pliage à double inflexion ou soyage (16) tourné vers le centre du siège et en ce que la zone de maintien du profilé de support (14) présente un soyage (17) tourné vers l'extérieur.

4. Siège selon une ou plusieurs des revendications précédentes, caractérisé en ce que le profilé de support (13) présente avantageusement dans la zone de liaison un évidement (34) en forme de segment et est directement relié à la roue à denture droite (19) du dispositif de réglage et de blocage.

5. Siège selon une ou plusieurs des revendications précédentes, caractérisé en ce que le profilé de support (13) présente, dans la zone de liaison, un œillet de raccordement (40) rigidement relié à celui-ci en débordant entièrement la roue à denture droite (19).

6. Siège selon une ou plusieurs des revendications précédentes, caractérisé en ce que la glissière mobile (11) est formé du profilé de support (13) et d'une barre profilée complémentaire (39), reliée à celui-ci dans la zone de pied (36), venant s'engager dans la glissière de guidage (10) et reliée, dans la zone de raccordement de l'articulation tournante, à un segment de maintien (37) assurant son appui axial.

*FIG.1*

EP 0 111 674 B1

FIG.2

FIG.3

FIG.4

FIG.5

EP 0 111 674 B1

FIG.6

FIG.7

31

24

22

40

19

13

14

10

26

40

28

24

27

21

23

29

22

19

33

20

17

13

14

11

10

12

30

EP 0 111 674 B1